# EUROPÄISCHE PATENTANMELDUNG

(11) **EP 1 118 650 A2**
(43) Veröffentlichungstag der Anmeldung: **25.07.2001**
(21) Anmeldenummer: 00204616.7
(22) Anmeldetag: 18.12.2000
(51) Int. Cl.: C09K 11/78, C09K 11/79, C09K 11/86, H01J 17/49

(54) **Plasmabildschirm mit rotem Leuchtstoff**

(30) Priorität: 22.12.1999 DE 19962029
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas, Dr., c/o Philips Corporate, 52064 Aachen (DE); Mayr, Walter, c/o Philips Corporate, 52064 Aachen (DE); Nikol, Hans, Dr,, c/o Philips Corporate, 52064 Aachen (DE)
(74) Vertreter: Volmer, Georg, Dipl.-Ing.

(57) **Zusammenfassung**

Plasmabildschirm ausgerüstet mit einer Leuchtstoffschicht, die einen roten, Eu³⁺-aktivierten Leuchtstoff enthält, der einen verbesserten, roten Farbpunkt (x ≥ 0.65 und y ≤ 0.35) und kürzere Abklingzeiten τ_{1/10} aufweist als der Standard-Leuchtstoff (Y,Gd)BO₃. Der erfindungsgemäße Leuchtstoff weist ein Gitter auf, in dem der Aktivator Eu³⁺ einen Platz besetzt, der keine Inversionssymmetrie aufweist.

## Beschreibung

Die Erfindung betrifft einen Plasmabildschirm ausgerüstet mit einer Leuchtstoffschicht, die einen roten, Eu³⁺-aktivierten Leuchtstoff enthält.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich erzeugt. Durch Leuchtstoffe wird dieses Licht in sichtbares Licht umgewandelt und durch die Frontplatte der Glaszelle zum Betrachter emittiert.

Als roter Leuchtstoff wird in vielen Plasmabildschirmen (Y,Gd)BO₃:Eu verwendet, weil dieser Leuchtstoff eine höhere Lichtausbeute bei Anregung durch VUV-Licht zeigt als andere rot emittierende Leuchtstoffe. Beträchtliche Nachteile dieses Leuchtstoffes sind einerseits der Farbpunkt, der mit x = 0.64 und y = 0.35 zu orange für Video-Anwendungen ist und andererseits die relativ lange Abklingzeit von τ_{1/10} = 9 ms.

Durch den orangen Farbpunkt von. (Y,Gd)BO₃:Eu wird in Plasmabildschirmen eine geringere Farbskala erhalten, verglichen mit Kathodenstrahlröhren, bei denen Y₂O₂S:Eu als roter Leuchtstoff verwendet wird. Letzterer weist einen Farbpunkt von x = 0.66 und y = 0.33 auf.

Der Farbpunkt und die Abklingzeit τ_{1/10} eines Eu³⁺-aktivierten Leuchtstoffes hängen von der lokalen Symmetrie der Gitterplätze ab, die die Eu³⁺-Kationen im Leuchtstoff-Wirtsgitter einnehmen. In YBO₃, GdBO₃ und (Y,Gd)BO₃, die ein Pseudovaterit-Gitter besitzen, nimmt das Eu³⁺-Kation zwei kristallographische Plätze mit leicht verzerrter S₆-Symmetrie ein. Als Konsequenz können elektrische Dipol-Übergänge ⁵D₀ - ⁷F_{2,4}, welche bei einer S₆-Symmetrie oder D_{3d}-Symmetrie verboten sind, beobachtet werden.

Die spektroskopischen Auswahlregeln sind aufgrund der Verzerrung gelockert und das Emissionsspektrum von (Y,Gd)BO₃:Eu weist zwei intensive Linien bei 612 und 627 nm auf, die dem ⁵D₀ - ⁷F₂-Übergang zugeordnet werden können. Dabei werden aufgrund der Kristallfeld-Aufspaltung des ⁷F₂-Niveaus zwei Emissionslinien erhalten. Die intensivste Emissionslinie stellt aber der magnetische Dipol-Übergang ⁵D₀ - ⁷F₁ bei 595 nm dar. Die hohe Intensität der Emissionslinie bei 595 nm ist verantwortlich für den orangen Farbpunkt dieses Leuchtstoffes. Die geringere Übergangswahrscheinlichkeit eines magnetischen Dipol-Übergangs führt zu längeren Emissions-Abklingzeiten dieses Leuchtstoffes.

Der Erfindung liegt die Aufgabe zugrunde, einen roten Leuchtstoff mit verbessertem Farbpunkt und kürzerer Abklingzeit τ_{1/10} für Plasmabildschirme bereitzustellen.

Die Aufgabe wird gelöst durch einen Plasmabildschirm ausgerüstet mit einer Leuchtstoffschicht, die einen roten, Eu³⁺-aktivierten Leuchtstoff enthält, der ein Wirtsgitter mit einer Kristallstruktur aufweist, in dem die Eu³⁺-Kationen Plätze ohne Inversionssymmetrie einnehmen.

In einem Leuchtstoff, bei dem das Eu³⁺-Kation in der Kristallstruktur des Wirtsgitter Gitterplätze einnimmt, die kein Inversionssymmetriezentrum besitzen, sind nach den spektroskopischen Auswahlregeln elektrische Dipol-Übergänge ⁵D₀ - ⁷F_{2,4,6} des Eu³⁺-Kations erlaubt. Derartige Übergänge sind verboten, wenn das Eu³⁺-Kation im Gitter Plätze einnimmt, die eine Inversionssymmetrie besitzen. In diesem Fall ist nur ein magnetischer Dipol-Übergang ⁵D₀ - ⁷F₁ erlaubt.

Dementsprechend zeigen Leuchtstoffe mit einem Gitter, in dem die Eu³⁺-Kationen Plätze ohne Inversionssymmetrie einnehmen, intensive Emissionsbanden in einem Bereich von 610 bis 630 nm auf, die auf elektrischen Dipol-Übergänge beruhen.

Es ist bevorzugt, dass der Leuchtstoff ein Gitter mit Fergusonit-Struktur, Aragonit-Struktur, Thortveitit-Struktur, Matlockit-Struktur oder Xenotim-Struktur aufweist.

In diesen Wirtsgittern nimmt das Eu³⁺-Kation einen dreiwertigen Gitterplatz ohne Inversionssymmetrie ein.

Es weiterhin bevorzugt, dass der Leuchtstoff ausgewählt ist aus der Gruppe Ba₂Gd₂(SiₓGe₁₋ₓ)₄O₁₃, (YₓGd₁₋ₓ)NbO₄, (YₓGd₁₋ₓ)TaO₄, (YₓGd₁₋ₓ)OF, (YₓGd₁₋ₓ)OCl und (ScₓLu₁₋ₓ)₂Si₂O₇, wobei in Fällen 0 ≤ x ≤ 1 gilt.

Diese Leuchtstoffe weisen mit Eu³⁺ als Aktivator einen Farbpunkt von x ≥ 0.65 und y ≤ 0.35 auf.

Es ist außerdem bevorzugt, dass der Anteil an Eu³⁺ im Leuchtstoff zwischen 0.5 und 10 Mol-% ist.

Der Anteil an Eu³⁺ darf nicht zu niedrig sein, da sonst die Absorption der UV-Strahlung zu gering ist. Der Anteil darf andererseits nicht zu hoch sein, da ansonsten die Lichtausbeute aufgrund von Konzentrations-Quenching zu gering ist.

Im folgenden soll anhand von sieben Figuren und sechs Ausführungsbeispielen die Erfindung näher erläutert werden. Dabei zeigt
- Fig. 1: den Aufbau und das Funktionsprinzip einer einzelnen Plasmazelle in einem AC-Plasmabildschirm,
- Fig. 2: das Emissionsspektrum von Ba₂Gd₂Si₄O₁₃:Eu,
- Fig. 3: das Emissionsspektrum von Ba₂Gd₂Ge₄O₁₃:Eu,
- Fig. 4: das Emissionsspektrum von (Y_{0.5}Gd_{0.5})NbO₄:Eu,
- Fig. 5: das Emissionsspektrum von Sc₂Si₂O₇:Eu,
- Fig. 6: das Emissionsspektrum von (Y_{0.5}G_{0.5})OF:Eu und
- Fig. 7: das Emissionsspektrum von (Y_{0.5}Gd_{0.5})OCl:Eu.

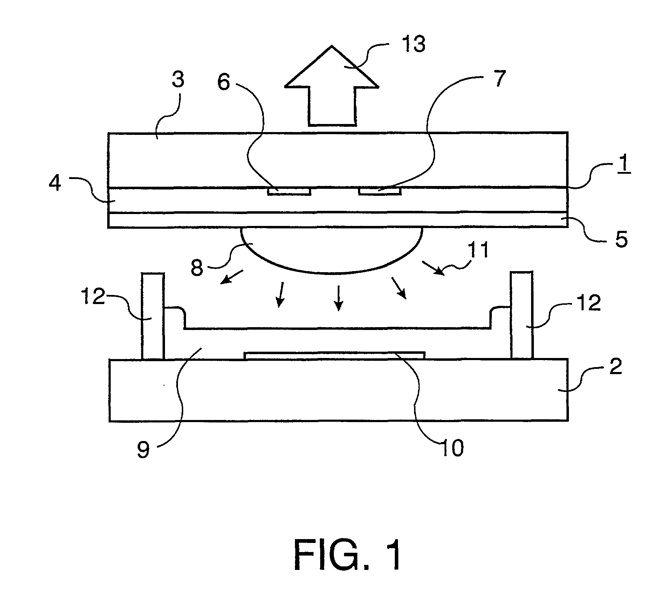

Gemäß Fig. 1 weist eine Plasmazelle eines AC-Plasmabildschirms mit einer koplanaren Anordnung eine Frontplatte 1 und eine Rückplatte 2 auf. Die Frontplatte 1 enthält eine Glasplatte 3, auf der eine dielektrische Schicht 4 und darüber eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 derart aufgebracht, dass sie von der dielektrischen Schicht 4 bedeckt sind. Die Entladungselektroden 6,7 sind zum Beispiel aus Metall oder ITO. Die Rückplatte 2 ist aus Glas und auf der Rückplatte 2 sind parallele, streifenförmige, senkrecht zu den Entladungselektroden 6,7 verlaufende Adresselektroden 10 aus beispielsweise Ag aufgebracht. Diese sind von Leuchtstoffschichten 9 in einer der drei Grundfarben rot, grün oder blau bedeckt. Die einzelnen Leuchtstoffschichten 9 sind durch vorzugsweise aus dielektrischem Material bestehende Barrieren 12 getrennt.

In der Entladungszelle, als auch zwischen den Entladungselektroden 6,7, von denen jeweils eine als Kathode bzw. Anode wirkt, befindet sich ein Gas, vorzugsweise ein Edelgasgemisch aus beispielsweise He, Ne, Xe oder Kr. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das vorzugsweise Strahlung 11 im UV-Bereich oder im VUV-Bereich erzeugt wird. Diese Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Als rote Leuchtstoffe werden beispielsweise Eu³⁺-aktivierte Leuchtstoffe wie Ba₂Gd₂(SiₓGe₁₋ₓ)₄O₁₃:Eu, (YₓGd₁₋ₓ)NbO₄:Eu, (YₓGd₁₋ₓ)TaO₄:Eu, (YₓGd₁₋ₓ)OF:Eu, (YₓGd₁₋ₓ)OCl:Eu oder (ScₓLu₁₋ₓ)₂Si₂O₇:Eu, wobei in allen Fällen 0 ≤ x ≤ 1 gilt, verwendet.

Als Herstellungsverfahren für die Leuchtstoffschicht kommen sowohl Trockenbeschichtungsverfahren, z. B. elektrostatische Abscheidung oder elektrostatisch unterstütztes Bestäuben, als auch Nassbeschichtungsverfahren, z. B. Siebdruck, Dispenserverfahren, bei denen eine Suspension mit einer sich dem Kanälen entlang bewegenden Düse eingebracht wird, oder Sedimentation aus der flüssigen Phase, in Betracht.

Für die Nassbeschichtungsverfahren müssen die Leuchtstoffe in Wasser, einem organischen Lösemittel, gegebenenfalls zusammen mit einem Dispergiermittel, einem Tensid und einem Antischaummittel oder einer Bindemittelzubereitung dispergiert werden. Geeignet für Bindemittelzubereitungen für Plasmabildschirme sind organische und anorganischen Bindemittel, die eine Betriebstemperatur von 250°C ohne Zersetzung, Versprödung oder Verfärbung überstehen.

Nach Aufbringen der Leuchtstoffschicht wird die Rückplatte 2 zusammen mit weiteren Komponenten wie zum Beispiel einer Frontplatte 1 und einem Edelgasgemisch zur Herstellung eines AC-Plasmabildschirms verwendet. Grundsätzlich kann ein erfindungsgemäßer Leuchtstoff auch bei anderen Typen von Plasmabildschirmen, wie zum Beispiel bei Plasmabildschirmen mit Matrixanordnung oder DC-Plasmabildschirmen eingesetzt werden.

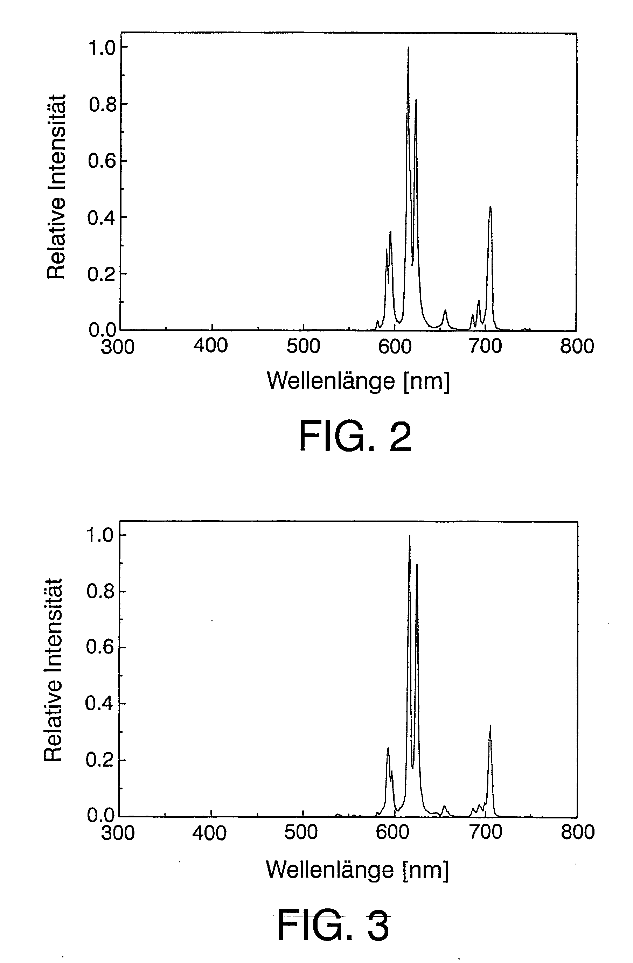

Die Fig. 2 bis Fig. 7 zeigen die Emissionspektren einiger erfindungsgemäßer rot emittierenden Leuchtstoffe, welche einen Anteil an Eu³⁺-Aktivator von 5 Mol-% aufweisen.

Im folgenden werden Ausführungsformen der Erfindung erläutert, die beispielhafte Realisierungsmöglichkeiten darstellen.

### Ausführungsbeispiel 1

5.00 g (25.3 mmol) BaCO₃, 3.14 g (50.7 mmol) SiO₂, 4.13 g (11.4 mmol) Gd₂O₃ und 446 mg (1.27 mmol) Eu₂O₃ wurden in Wasser suspendiert und 10 min im Ultraschallbad behandelt. Nachdem das Wasser destillativ entfernt wurde, wurde das erhaltene Pulver gemörsert. Anschließend wurde das Pulvergemisch 1 h bei 1250 °C geglüht, gemörsert und erneut 1 h bei 1250 °C geglüht. Das erhaltene Leuchtstoffpulver Ba₂Gd_{1.8}Si₄O₁₃:Eu_{0.2} wurde nochmals gemörsert. Das Emissionsspektrum dieses Leuchtstoffes ist in Fig. 2 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 2

5.00 g (25.3 mmol) BaCO₃, 5.30 g (50.7 mmol) GeO₂, 4.13 g (11.4 mmol) Gd₂O₃ und 446 mg (1.27 mmol) Eu₂O₃ wurden gemischt und gemörsert. Anschließend wurde das Pulvergemisch 1 h bei 1200 °C geglüht, gemörsert und erneut 1 h bei 1250 °C geglüht. Das erhaltene Leuchtstoffpulver Ba₂Gd_{1.8}Ge₄O₁₃:Eu_{0.2} wurde nochmals gemörsert. Das Emissionsspektrum dieses Leuchtstoffes ist in Fig. 3 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 3

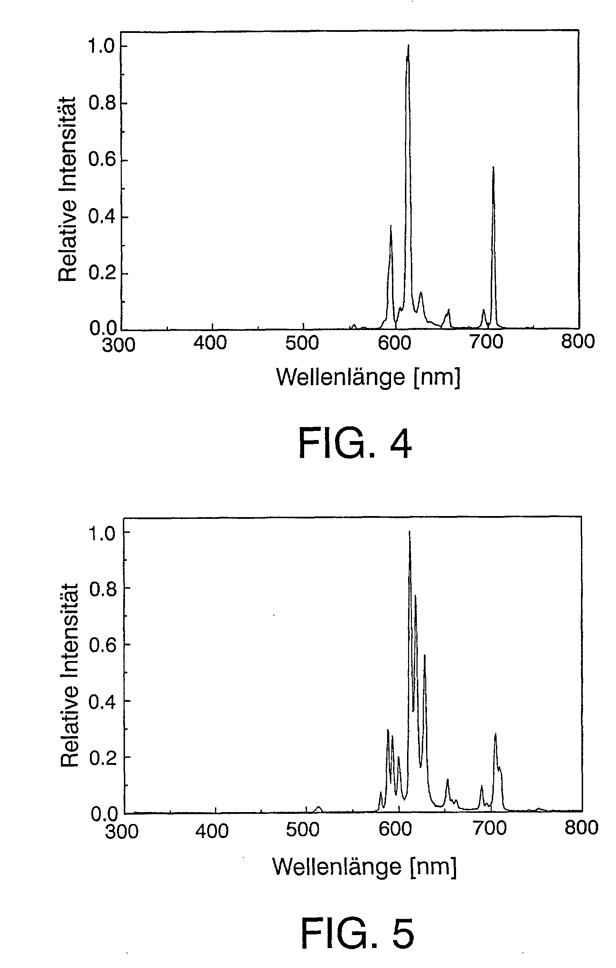

2.41 g (6.64 mmol) Gd₂O₃, 1.50 g (6.64 mmol) Y₂O₃, 406 mg (1.15 mmol) Eu₂O₃ und 3.84 g (14.4 mmol) Nb₂O₃ wurden gemischt und gemörsert. Das erhaltene Pulver wurde 4 h bei 1250 °C geglüht und danach in eine wässrige Lösung von Li₂SO₄ (25 Gew.-%) gegeben. Das erhaltene Gemisch wurde 2 h zum Sieden erhitzt. Der Leuchtstoff (Y_{0.5}Gd_{0.5})NbO₄:Eu wurde abfiltriert, 2 h bei 80 °C getrocknet und anschließend bei 1100 °C geglüht. Das Gitter des Leuchtstoffes wies eine Fergusonit-Struktur auf. Das Emissionsspektrum dieses Leuchtstoffes ist in Fig. 4 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 4

5.00 g (36.3 mmol) Sc₂O₃, 4.72 g (78.6 mmol) SiO₂ und 670 mg (1.91 mmol) Eu₂O₃ wurden in Wasser suspendiert und 10 min im Ultraschallbad behandelt. Nachdem das Wasser destillativ entfernt wurde, wurde das erhaltene Pulver gemörsert, 12 h bei 1400 °C geglüht und erneut gemörsert. Nach Zugabe von 520 mg (14.0 mmol) NH₄F wurde das erhaltene Pulver nochmals 12 h bei 1400 °C geglüht. Anschließend wurde das erhaltene Leuchtstoffpulver Sc₂Si₂O₇:Eu gemörsert. Das Gitter des Leuchtstoffes wies eine Thorveitit-Struktur auf. Das Emissionsspektrum dieses Leuchtstoffes ist in Fig. 5 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 5

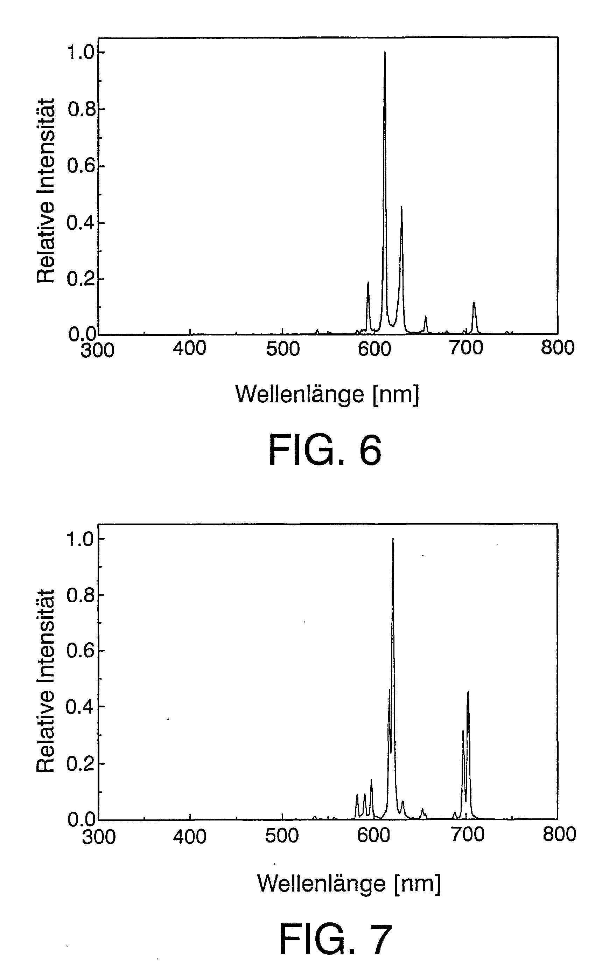

2.50 g (11.1 mmol) Y₂O₃, 4.01 g (11.1 mmol) Gd₂O₃ und 410 mg (1.17 mmol) Eu₂O₃ wurden in HNO₃ gelöst. Die erhaltene Lösung wurde auf einen pH-Wert von 4 eingestellt und auf 60 °C erhitzt. Durch Zugabe von Oxalsäure in einem fünffachen Überschuss und 15 minütigem Rühren wurden die Oxide wieder gefällt. Die mit ausgefallenen Oxalate wurden durch thermische Behandlung bei 900 °C zersetzt. Anschließend wurden die Oxide abgesaugt, zweimal mit destilliertem Wasser gewaschen, 3 h bei 120 °C getrocknet und anschließend 3 h bei 1000 °C geglüht. Nach Zugabe von 1.73 g (46.6 mmol) NH₄F wurde die erhaltene Mischung in einem abgedecktem Tiegel 1 h bei 950 °C in stickstoffhaltiger Atmosphäre kalziniert. Das erhaltene Leuchtstoffpulver (Gd_{0.5}Y_{0.5})OF:Eu wurde nochmals gemörsert. Das Emissionsspektrum dieses Leuchtstoffes ist in Fig. 6 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

### Ausführungsbeispiel 6

1.56 g (6.90 mmol) Y₂O₃, 2.50 g (6.90 mmol) Gd₂O₃, 202 mg (574 µmol) Eu₂O₃ und 1.54 g (28.7 mmol) NH₄Cl wurden gemischt und gemörsert. Das erhaltene Pulver wurde in einem abgedeckten Tiegel 4 h bei 400 °C erhitzt und anschließend erneut gemörsert. Nach Zugabe von 214 mg (2.87 mmol) KCl wurde der erhaltene Feststoff in einem abgedeckten Tiegel 4 h bei 900 °C geglüht. Das erhaltene Leuchtstoffpulver (Gd_{0.5}Y_{0.5})-OCl:Eu wurde nochmals gemörsert. Das Gitter des Leuchtstoffes wies eine Matlockit-Struktur auf. Das Emissionsspektrum dieses Leuchtstoffes ist in Fig. 7 gezeigt.

Anschließend wurde eine Suspension des Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Blau durchgeführt.

Durch thermische Behandlung der Rückplatte 2 bei 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

**Tabelle 1:**

| Eigenschaften ausgewählter roter Leuchtstoffe mit einem Anteil an Eu³⁺-Aktivator von 5%, bezogen auf das dreiwertige Wirtsgitterkation. | | | | |
|---|---|---|---|---|
| Leuchtstoff | Kristallgitter | Farbpunkt [x,y] | Lumen-Äquivalent [Im/W] | Abklingzeit τ_{1/10} [ms] |
| Ba₂Gd₂Si₄O₁₃:Eu | monoklin | 0.655, 0.340 | 240 | 3.0 |
| Ba₂Gd₂Ge₄O₁₃:Eu | monoklin | 0.655, 0.335 | 245 | 3.0 |
| (Y_{0.5}Gd_{0.5})NbO₄:Eu | monoklin | 0.650, 0.340 | 250 | 4.0 |
| Sc₂Si₂O₇:Eu | monoklin | 0.650, 0.340 | 250 | 4.0 |
| (Y_{0.5}Gd_{0.5})OF:Eu | trigonal | 0.655, 0.355 | 260 | 2.5 |
| (Y_{0.5}Gd_{0.5})OCl:Eu | tetragonal | 0.650, 0.340 | 210 | 2.0 |
| (Sc,Lu)₂Si₂O₇:Eu | monoklin | 0.650, 0.340 | 250 | 2.5 |

Alle erfindungsgemäßen Leuchtstoffe weisen einen roten Farbpunkt und verglichen mit (Y,Gd)BO₃:Eu eine deutlich kürzere Abklingzeit τ_{1/10} auf.

## Patentansprüche

1. Plasmabildschirm ausgerüstet mit einer Leuchtstoffschicht, die einen roten, Eu³⁺-aktivierten Leuchtstoff enthält, der ein Wirtsgitter mit einer Kristallstruktur aufweist, in dem die Eu³⁺-Kationen Plätze ohne Inversionssymmetrie einnehmen.

2. Plasmabildschirm nach Anspruch 1,
dadurch gekennzeichnet,
dass der Leuchtstoff ein Gitter mit Fergusonit-Struktur, Aragonit-Struktur, Thortveitit-Struktur, Matlockit-Struktur oder Xenotim-Struktur aufweist.

3. Plasmabildschirm nach Anspruch 1,
dadurch gekennzeichnet,
dass der Leuchtstoff ausgewählt ist aus der Gruppe Ba₂Gd₂(SiₓGe₁₋ₓ)₄O₁₃, (YₓGd₁₋ₓ)NbO₄, (YₓGd₁₋ₓ)TaO₄, (YₓGd₁₋ₓ)OF, (YₓGd₁₋ₓ)OCl und (ScₓLu₁₋ₓ)₂Si₂O₇, wobei in allen Fällen 0 ≤ x ≤ 1 gilt.

4. Plasmabildschirm nach Anspruch 1,
dadurch gekennzeichnet,
dass der Anteil an Eu³⁺ im Leuchtstoff zwischen 0.5 und 10 Mol-% liegt.
